(19) Europäisches Patentamt
European Patent Office
Office européen des brevets

(11) **EP 1 921 711 B1**

(12) **EUROPEAN PATENT SPECIFICATION**

(45) Date of publication and mention
of the grant of the patent:
**27.12.2017 Bulletin 2017/52**

(51) Int Cl.:
*H01Q 1/22* (2006.01)    *H01Q 9/04* (2006.01)

(21) Application number: **05781406.3**

(22) Date of filing: **02.09.2005**

(86) International application number:
**PCT/JP2005/016140**

(87) International publication number:
**WO 2007/029296 (15.03.2007 Gazette 2007/11)**

(54) **RF TAG AND METHOD FOR MANUFACTURING RF TAG**

HF-ETIKETT UND VERFAHREN ZUM HERSTELLEN EINES HF-ETIKETTS

ÉTIQUETTE HF ET SON PROCÉDÉ DE FABRICATION

(84) Designated Contracting States:
**DE FR GB**

(43) Date of publication of application:
**14.05.2008 Bulletin 2008/20**

(73) Proprietor: **Fujitsu Limited**
**Kawasaki-shi, Kanagawa 211-8588 (JP)**

(72) Inventors:
• **YAMAGAJO, Takashi**
  **Kawasaki-shi**
  **Kanagawa 211-8588 (JP)**
• **MANIWA, Toru**
  **Kawasaki-shi**
  **Kanagawa 211-8588 (JP)**
• **KAI, Manabu**
  **Kawasaki-shi**
  **Kanagawa 211-8588 (JP)**

(74) Representative: **Hoffmann Eitle**
**Patent- und Rechtsanwälte PartmbB**
**Arabellastraße 30**
**81925 München (DE)**

(56) References cited:
EP-A- 1 555 715          WO-A-2004/093249
JP-A- 03 126 302         JP-A- 09 199 931
JP-A- 49 055 259         JP-A- 2002 198 723
JP-A- 2002 366 917       JP-A- 2003 174 317
JP-A- 2004 207 929       JP-A- 2005 165 462
JP-A- 2005 203 878       JP-B2- 02 009 481
JP-B2- 03 027 121        US-A1- 2005 024 287

• **HAYASHIDA S ET AL: "CHARACTERISTICS OF BUILT-IN FOLDED MONOPOLE ANTENNA FOR HANDSETS" IEICE TRANSACTIONS ON COMMUNICATIONS, COMMUNICATIONS SOCIETY, TOKYO, JP, vol. E88-B, no. 6, 1 June 2005 (2005-06-01), pages 2275-2283, XP001230777 ISSN: 0916-8516**
• **NIU F ED - INSTITUTE OF ELECTRICAL AND ELECTRONICS ENGINEERS: "FOLDED L-ANTENNAS" IEEE ANTENNAS AND PROPAGATION SOCIETY INTERNATIONAL SYMPOSIUM. 2000 DIGEST. APS. SALT LAKE CITY, UT, JULY 16 -21, 2000; [IEEE ANTENNAS AND PROPAGATION SOCIETY INTERNATIONAL SYMPOSIUM], NEW YORK, NY : IEEE, US, 16 July 2000 (2000-07-16), pages 1666-1669, XP000993904 ISBN: 978-0-7803-6370-0**
• **'THE INSTITUTE OF ELECTRONICS, INFORMATION AND COMMUNICATION ENGINEERS: 'Antenna engineering handbook', vol. 1ST ED., 1999, DAI 10, OHMSHA, LTD. pages 112 - 116, XP003010028**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

This invention relates to an RF tag and a method of producing an RF tag.

BACKGROUND ART

In order to manage various goods, products, and other objects, RF tags are often used. This system includes a variety of RF tags and a reader/writer device (called RF tag reader) which reads information from each RF tag or writes information to each RF tag. An RF tag is accompanied with each of the respective objects. The RF tag reader may also be referred to as an interrogator. The RF tag may also be referred to as an RFID tag, a radio tag, an IC tag, etc. In an RF tag, an identification information (ID), a serial number, a date of production, a place of production, and other data may be additionally recorded.

Generally, RF tags are classified into an active model and a passive model. The active model RF tag is provided to generate electric power by itself, which makes it possible to simplify the layout and configuration of an RF tag reader. The passive model RF tag is provided so that it does not generate electric power by itself. The passive model RF tag receives energy supplied from the exterior so that it operates to transmit ID information and so on. Use of the passive model RF tag is desirable from the viewpoint of making RF tags inexpensive and will be promising in the future.

From the viewpoint of the frequency band of a transmission signal used, RF tags may be classified into an electromagnetic coupling type and an electromagnetic wave type. The RF tags of the former type use frequency bands ranging from several kilohertz to about 13 megahertz. The RF tags of the latter use UHF bands (for example, 950 MHz) and high frequency bands (for example, 2.45 GHz).

It is desirable to use a transmission signal with a high frequency from the viewpoint of increasing a distance that can be communicated and from the viewpoint of making RF tags small in size. As an example, it is known that the distance that can be communicated for an electromagnetic coupling type RF tag is at most about 1 meter. If the signal frequency is about 950 MHz, the corresponding wavelength is about 30 cm. However, if the signal frequency is about 13 MHz, the corresponding wavelength is about 23 m.

There are various objects that are considered as an object with which an RF tag can be accompanied. In particular, whether the object which an RF tag is accompanied with has conductivity is important in designing an RF tag. If the object is an insulation, the operating characteristics of an RF tag remain almost unchanged before and after the RF tag is attached to the object.

However, if an RF tag is attached to a conductive material, such as a metal housing, the image current by the conductive material occurs at the time of communication of the RF tag. Therefore, the operating characteristics of the RF tag differ greatly before and after the RF tag is attached to the object of a conductive material.

For the product uses in which the object with which an RF tag is accompanied is relatively small in size, or for the product uses in which the appearance of the object is most important (for example, a speedometer of a large-sized motorbike, a flower vase exhibited in a show window, etc.), it might be necessary to accommodate an RF tag in the object. In such a case, if the object in which the RF tag is accommodated can penetrate electromagnetic waves (UHF band), performing wireless communications with the RF tag is possible. However, also in this case, the operating characteristics of the RF tag vary greatly depending on whether a metal surface exists in the vicinity of the RF tag accommodated.

The non-patent document 1, which is available at the time of filing of the present application, discloses a conventional RF tag which is capable of being attached to a metal.

Non-patent Document 1: http://www.awid.com/product/mt_tag/mt.htm

Furthermore, the document WO 2004/093249 A1 discloses an RF tag comprising an antenna and an integrated circuit, wherein the antenna and the integrated circuit are arranged on a substrate having also a predetermined dielectric constant.

The document D2 EP 1 555 715 A1 discloses further an antenna device comprising an antenna with a forward path section, a folding section, and a backward path section, a power supply source at a branch point, wherein the antenna is arranged on a substrate.

An RF tag is also disclosed by the document US 2005/0024287 A1 that comprises an antenna with various paths and meanderline structures disposed there in between and an integrated circuit which is connected between two parts of said antenna. The antenna and the integrated circuit are arranged on a substrate, however, having some undefined dielectric constant.

Geometries of folded L-antennas, in particular ground and radio top folded L-antennas, are disclosed in Feng Niu, Institute of Electrical and Electronics Engineers: "Folded L-Antennas" IEEE Antennas and Propagation Society International Symposium. 2000 Digest. APS. Salt Lake City, UT, July 16-21, 2000, which may be formed from a driving L-antenna, a parasitic L-antenna and a short connecting two elements at about a quarter of a wavelength away from the driving point.

DISCLOSURE OF THE INVENTION

PROBLEM TO BE SOLVED BY THE INVENTION

The RF tag as disclosed in the non-patent document 1 has the antenna structure which is designed to operate as a dipole antenna having a length larger than half the wavelength. Specifically, in this RF tag, a conductive material which provides a pattern of an antenna is provided on the front surface of a dielectric material, a metal layer is formed on the bottom surface of the dielectric material, and the overall length of the RF tag is equal to about 1/2 wavelength.

Since the operating frequency is in a range of 902 to 928 MHz, the overall length of the RF tag is set to about 17 cm. However, this RF tag is too large in size, and there is a problem that the kind of the objects to which the RF tag can be attached is restricted.

According to one aspect of the invention, there are disclosed an RF tag which can be accommodated in a small housing having a metal surface, and a method of producing the RF tag.

MEANS FOR SOLVING THE PROBLEM

In an embodiment of the invention which solves or reduces one or more of the above-mentioned problems, there is disclosed an RF tag comprising: a grounding conductor; a spacer of a material having a predetermined dielectric constant in the shape of a rectangular parallelepiped; a first transmission line forming an electric closed loop to constitute a dipole antenna, said first transmission line arranged on a top and front surface of the spacer, and arranged along sides of a notional rectangular parallelepiped of height T, length L and width W, said notional parallelepiped defined by its bottom surface with points AHKJ and the top surface with points BGED, and having a top and bottom surface of dimensions $W \times L$, front and back surface of dimensions $W \times T$ and side surfaces of dimensions $L \times T$, said first transmission line having two line elements of length T extending between points AB and GH, arranged on the front surface, two further line elements of length L extending between points BD and GE, arranged on the top surface, and a line element between points DE of length W, arranged on the top surface, the line elements AB, BD, DE, EG and GH forming said closed loop, said first transmission line connected to the grounding conductor at points A and H, wherein $W<2(L+T)$; a first branch point C located between the points B and D; a second branch point F located between the points G and E; a second transmission line connected between the first branch point C and the second branch point F, and arranged geometrically in parallel with the line element between the points D and E, to constitute an inductor; a power supply circuit (IC) connected in series and arranged between said first branch point C on the first transmission line and the point A at the grounding conductor, wherein the first and second transmission lines are arranged on the spacer, and wherein the grounding conductor is arranged on a bottom surface of the spacer and occupies at least the bottom surface defined by points AHKJ, and said first transmission line is arranged on a top surface of the spacer, and the second transmission line is arranged on the front surface of the spacer

EFFECTS OF THE INVENTION

According to the RF tag in an embodiment of the invention, it is possible to accommodate the RF tag in a small housing having a metal surface.

BRIEF DESCRIPTION OF THE DRAWINGS

FIG. 1 is a perspective view of an RF tag in an embodiment of the invention.
FIG. 2 is a diagram showing the positional relationship between conductive transmission lines and a grounding conductor.
FIG. 3 is a diagram for explaining operation of the RF tag.
FIG. 4 is a diagram for explaining operation of the RF tag.
FIG. 5 is a diagram for explaining the characteristics of a dipole antenna and a loop antenna.
FIG. 6A is a diagram for explaining a method of producing an RF tag in an embodiment of the invention.
FIG. 6B is a diagram for explaining the method of producing the RF tag in this embodiment.
FIG. 6C is a diagram for explaining the method of producing the RF tag in this embodiment.
FIG. 6D is a diagram for explaining the method of producing the RF tag in this embodiment.

FIG. 7A is a diagram for explaining a method of producing an RF tag in another embodiment of the invention.

FIG. 7B is a diagram for explaining the method of producing the RF tag in this embodiment.

FIG. 7C is a diagram for explaining the method of producing the RF tag in this embodiment.

FIG. 8 is a perspective view of an example of an RF tag for use in simulation tests.

FIG. 9 is a diagram showing the composition of an equivalent circuit of an antenna and an IC chip.

FIG. 10 is a diagram for explaining the results of simulation tests concerning the relationship between line element length and corresponding chip capacitance.

FIG. 11 is a diagram for explaining the results of simulation tests concerning the relationship between line element length and antenna resistance.

FIG. 12 is a diagram for explaining the results of simulation tests concerning the relationship between line element length and antenna gain.

FIG. 13 is a diagram for explaining the frequency characteristic of an RF tag.

FIG. 14 is a diagram for explaining the results of simulation tests concerning the relationship between frequency and chip capacitance.

FIG. 15 is a diagram for explaining the results of simulation tests concerning the relationship between frequency and antenna gain.

FIG. 16 is a diagram showing an example in which an RF tag is accommodated in a housing having a metal surface.

FIG. 17A is a diagram showing an RF tag in which transmission lines of different line widths are arranged.

FIG. 17B is a diagram showing an RF tag in which transmission lines of different line widths are arranged.

FIG. 17C is a diagram showing an RF tag in which transmission lines of different line widths are arranged.

FIG. 17D is a diagram showing an RF tag in which a power supply circuit is arranged at a different position.

FIG. 17E is a diagram showing an RF tag in which transmission lines of different spacing are arranged.

FIG. 17F is a diagram showing an RF tag in which transmission lines of different spacing are arranged.

FIG. 17G is a diagram showing an RF tag in which transmission lines of an inductor are arranged independently with those of an antenna.

FIG. 17H is a diagram showing an RF tag in which transmission lines of an inductor are arranged independently with those of an antenna.

## DESCRIPTION OF REFERENCE NUMERALS

10 insulating material spacer
12 grounding conductor
161 metal surface
162 insulating material surface

## BEST MODE FOR CARRYING OUT THE INVENTION

An RF tag in an embodiment of the invention includes a first transmission line which is provided to constitute a dipole antenna, and a second transmission line which is provided to constitute an inductor and arranged in parallel with a power supply circuit provided on the first transmission line. The first transmission line is connected to a grounding conductor and an image current is used at the time of operation of the RF tag. The matching in impedance of the antenna and the power supply circuit may be attained by adjusting inductance. Accordingly, it is possible to provide a very small RF tag which may be accompanied with an object having a metal surface.

The above-mentioned RF tag may be configured so that the second transmission line includes a transmission line element which connects two branch points on the first transmission line. A part of the transmission line of the dipole antenna and a part of the transmission line of the inductor are arranged in common, and it is possible to make the size of the entire RF tag small.

The above-mentioned RF tag may be configured so that a position of the branch point of the first transmission line and the second transmission line is adjusted so that an impedance of the dipole antenna matches with an impedance of the power supply circuit.

The above-mentioned RF tag may be configured so that the first and second transmission lines are arranged on a spacer of a material having a predetermined dielectric constant. From the theoretical viewpoint, an air space may be provided between the first and second transmission lines and the grounding conductor. However, from the practical viewpoint of securing the rigidity of an RF tag, it is desirable to arrange the spacer between the first and second transmission lines and the grounding conductor.

The above-mentioned RF tag may be configured so that the first and second transmission lines are arranged to have a form along sides of a rectangular parallelepiped. In this case, the size of the RF tag is made equal to the size of the rectangular parallelepiped.

The above-mentioned RF tag may be configured so that the first and second transmission lines are arranged so that an image current flowing through the first and second transmission lines flows through the grounding conductor. In this case, the size of the dipole antenna can be made small.

The above-mentioned RF tag may be configured so that the first transmission line includes a first pair of parallel transmission line elements connected to the grounding conductor, and the second transmission lines includes a second pair of parallel transmission line elements perpendicularly intersecting the first pair of parallel transmission line elements. In this case, the pattern of transmission lines is simplified, and it is possible to not only raise the yield but also prevent effectively unnecessary reflection of a signal flowing through the transmission lines.

The above-mentioned RF tag may be configured so that a line element length of a second pair of transmission line elements included in the second transmission line is smaller than twice a line element length of a first pair of transmission line elements included in the first transmission line. In this case, it is possible to ensure that the antenna formed on the first transmission line operates as a dipole antenna instead of operating as a loop antenna.

The above-mentioned RF tag may be configured so that the grounding conductor is connected to a metal surface of an object with which the RF tag is accompanied. In this case, the grounding potential is supplied to the RF tag stably, and the characteristics (antenna gain, etc.) of the RF tag can be improved.

The above-mentioned RF tag may be configured so that the first and second transmission lines are formed by microstrip lines.

A method of producing an RF tag in an embodiment of the invention includes: forming a conductive layer with first and second window frames being formed adjacent to each other, on a flexible film; bending the flexible film so that a portion of the conductive layer where the first window frame is formed and a portion of the conductive layer where no window frame is formed face each other; and sticking the flexible film on a spacer of an insulating material. Accordingly, it is possible to simply manufacture a small RF tag which is accompanied with an object having a metal surface.

In a method of producing an RF tag in an embodiment of the invention, the RF tag includes a first transmission line constituting a dipole antenna and a second transmission line constituting an inductor which are formed on a front surface of a spacer of an insulating material, and a grounding conductor on a bottom surface of the spacer which is electrically connected to the first and second transmission lines, the method including: providing a power supply circuit between a branch point on the first transmission line and the grounding conductor; and connecting the second transmission line to a branch point on the first transmission line so that the second transmission line is arranged in parallel with the power supply circuit. Accordingly, it is possible to simply manufacture a small RF tag which is accompanied with an object having a metal surface, by using the existing method of producing microstrip lines.

A description will be given of embodiments of the invention with reference to the accompanying drawings.

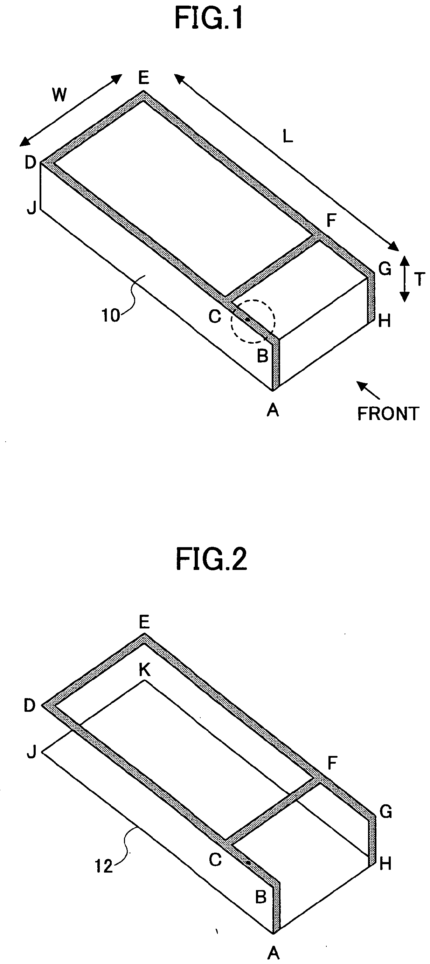

FIG. 1 is a perspective view of an RF tag in an embodiment of the invention. This RF tag includes a spacer 10, a plurality of conductive line elements disposed on the front and top surfaces of the spacer 10, a power supply circuit disposed on the line element (as indicated by the dotted line between the points B and C in FIG. 1), and a grounding conductor 12 (see FIG. 2) disposed on the bottom surface of the spacer 10. FIG. 2 shows the positional relationship between the conductive transmission lines and the grounding conductor.

The spacer 10 has a predetermined relative permittivity which is equal to, for example, 2.6. The spacer 10 is arranged in a form of a rectangular parallelepiped which has a predetermined length L (for example, 31 mm), a predetermined width W (for example, 13 mm), and a predetermined thickness T (for example, 6 mm). These numerical values are given as an example, and any other numerical values may be used. Generally, according to the invention, it is permitted that the length L is smaller than half the wavelength (UHF band) of a transmission signal used.

The plurality of conductive line elements are arranged on the front and top surfaces of the spacer 10. As illustrated, the conductive line elements are arranged to have a form along the sides of the rectangular parallelepiped. The line elements are used to represent all or a part of a transmission line. A first transmission line, passing the respective points A, B, C, D, E, F, G and H and connected to the grounding conductor 12, forms a first closed loop to constitute a dipole antenna. An integrated circuit IC (called the power supply circuit) is provided to perform storing and processing of information and transmitting/receiving of an electric wave, and this integrated circuit is disposed on a conductive line element BC between the points B and C.

Two branch points C and F are provided on the first closed loop, and a conductive line element CF is disposed to connect the branch points C and F together. A second transmission line, passing the respective points C, F, G, H and A and containing the conductive line element CF, is electrically connected in parallel with the power supply circuit to constitute an inductor.

Next, the operation of the RF tag according to the invention will be explained.

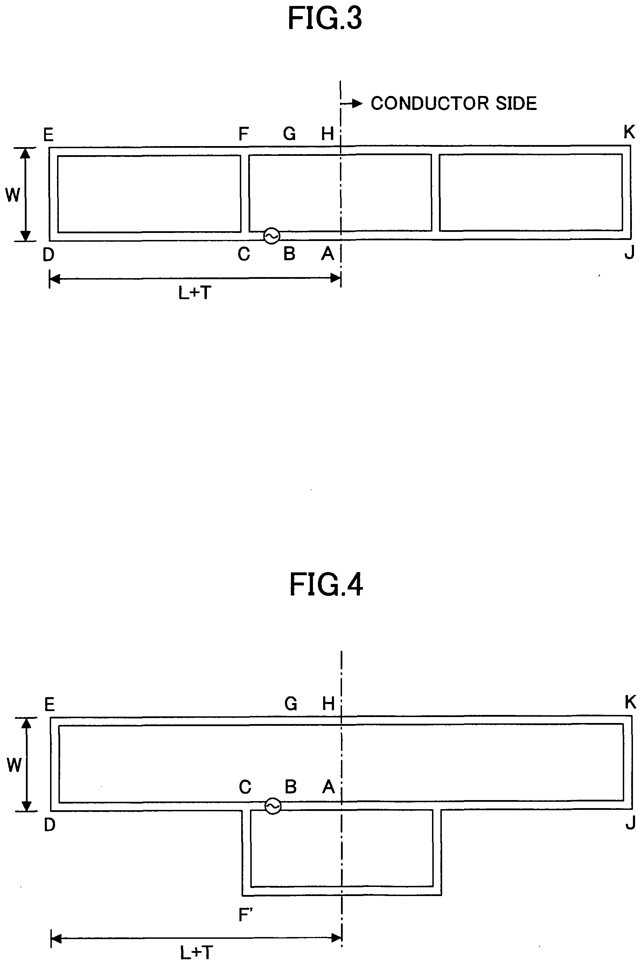

As shown in FIG. 2, the transmission lines on the front surface of the spacer 10 are electrically connected to the grounding conductor 12 on the bottom surface of the spacer 10. Therefore, an image current flows through the grounding conductor 12 at the time of operation of the RF tag, and the transmission lines shown in FIG. 2 can be considered equivalent to the transmission lines shown in FIG. 3.

Furthermore, if the transmission lines shown in FIG. 3 are divided into the inductor containing the line element CF and the portion constituting the dipole antenna, the transmission lines shown in FIG. 3 can be considered equivalent to the transmission lines shown in FIG. 4.

As shown in FIG. 4, the RF tag include a folded-dipole antenna which passes the points A, B, C, D, E, G, H, K, J and A, and an inductor which is formed with the transmission line CF' (arranged in parallel with the power supply circuit).

As is apparent from the simulation results (which will be mentioned later), the inductance of the inductor is adjusted by changing a position of the point C on the line element BD (or a position of the point F on the line element GE indicated in FIG. 3). By adjusting this inductance appropriately, the impedance of the dipole antenna and the impedance of the power supply circuit can be matched appropriately.

Among the line elements shown in FIG. 1 and FIG. 2, the portions of the line element AB and the line element GH directly contribute to radiation of electromagnetic waves. Accordingly, the larger the thickness T of the spacer 10, the better the performance of the tag antenna, such as antenna gain.

As mentioned above, the line element lengths W, L and T may take various numeral values. However, in order to ensure that the antenna functions as a dipole antenna, it is necessary that the line element lengths W, L and T satisfy the condition: W < 2(L+T).

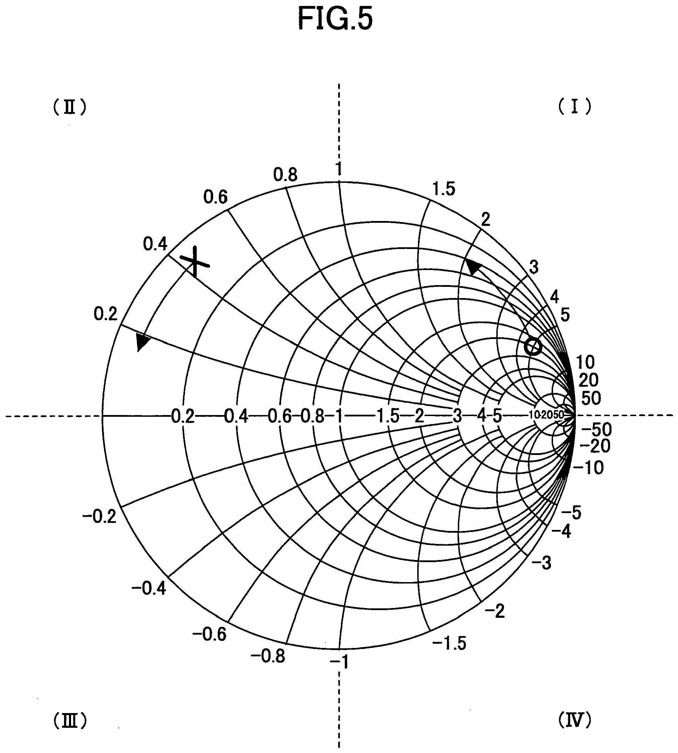

If W = 2(L+T), the corresponding antenna is no longer a dipole antenna and functions as a loop antenna. Under the conditions currently assumed in this embodiment, the impedance of the antenna after the impedance adjustment is done by the inductor should be placed in the first quadrant (I) of the Smith chart as shown in FIG. 5.

In FIG. 5, the white circle denotes the impedance of the dipole antenna before impedance adjustment (W < 2(L+T)). If the inductance is changed by changing the position of the branch point C on the line element, then the impedance is changed as indicated by the arrow extending from the white circle in FIG. 5.

On the other hand, the impedance of a loop antenna is placed in the second quadrant (II) of the Smith chart. In FIG. 5, the X mark denotes a corresponding impedance of the loop antenna. In the case of the loop antenna, even if the inductance is changed by adjusting the position of the branch point C, the impedance is changed as indicated by the arrow extending from the X mark in FIG. 5. For this reason, it is difficult to place the impedance in the first quadrant of the Smith chart in the case of a loop antenna.

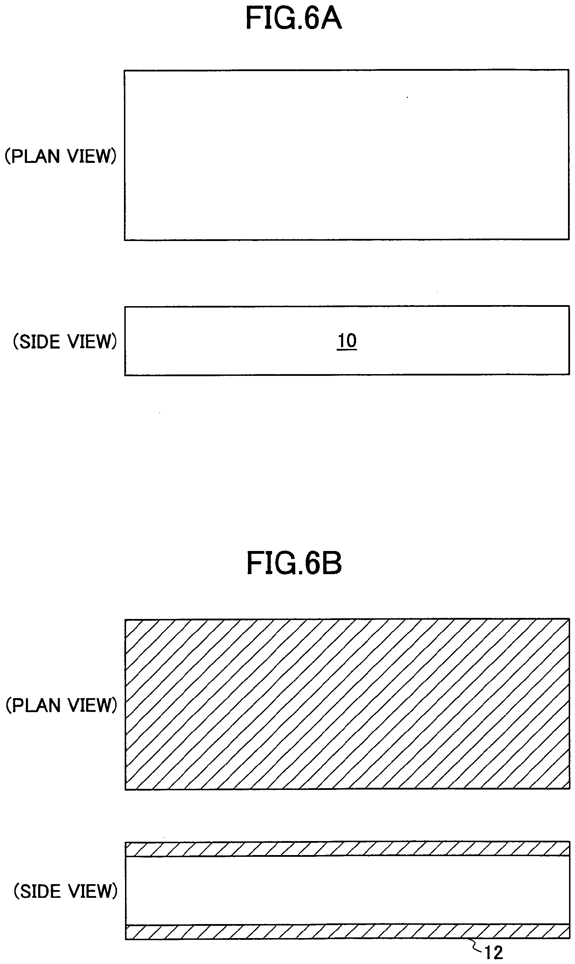

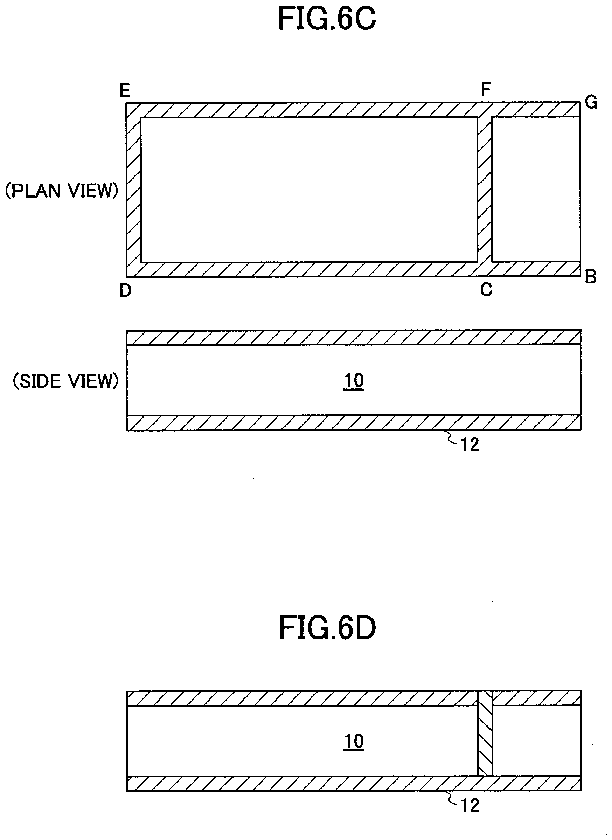

FIG. 6A through FIG. 6D are diagrams for explaining a method of producing an RF tag in an embodiment of the invention. Each of FIG. 6A, FIG. 6B and FIG. 6C includes a plan view and a side view of the RF tag, and FIG. 6D includes only a side view of the RF tag.

In the step shown in FIG. 6A, a spacer 10 with predetermined physical properties is arranged. For example, the spacer 10 has a relative permittivity of 2.6 and a dielectric loss (tan $\delta$) of 0.008.

In the step shown in FIG. 6B, a conductive layer is formed all over the top and bottom surfaces of the spacer 10 using the known metal film deposition technology, such as vapor deposition. For example, the conductive layer has a conductivity of $5 \times 10^6$ S/m.

In the step shown in FIG. 6C, a patterning of the conductive layer on the top surface of the spacer 10 is performed using the known patterning technology, such as photolithography. By this patterning, most of the transmission lines as shown in FIG. 1 and FIG. 2 (all the line elements other than the line element AB and the line element GH) are formed. The transmission lines may be formed by microstrip lines.

In the step shown in FIG. 6D, a through hole which penetrates the spacer 10 from the transmission line in a vicinity of the point B and reaches the conductive layer on the bottom surface is formed. Similarly, a through hole which penetrates the spacer 10 from the transmission line in a vicinity of the point G and reaches the conductive layer on the bottom surface is also formed. These through holes are filled up with a conductive material, and the transmission line on the top surface of the spacer and the grounding conductor on the bottom surface of the spacer are electrically connected together by the through holes.

For the sake of convenience of description, a step of arranging a power supply circuit has been omitted. A power supply circuit may be arranged on the line element BC at a suitable stage subsequently after the step of FIG. 6C is performed.

For the sake of convenience of description, the conductive layer for the transmission lines on the top surface of the spacer and the conductive layer for the grounding conductor on the bottom surface of the spacer are formed simultaneously. Alternatively, the conductive layer for the transmission lines on the top surface of the spacer and the conductive layer for the grounding conductor on the bottom surface of the spacer may be formed separately, and they may be formed using different source materials.

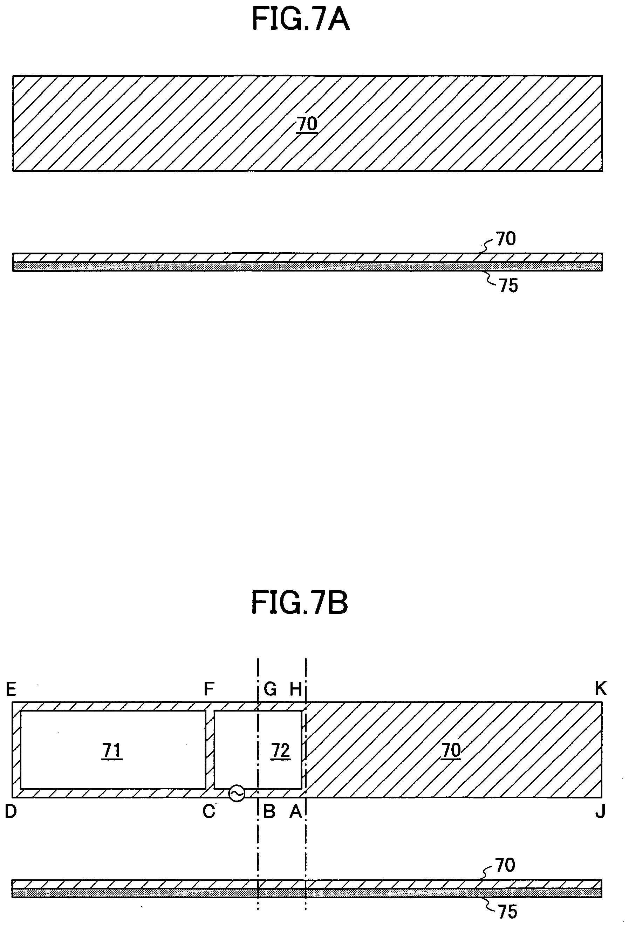

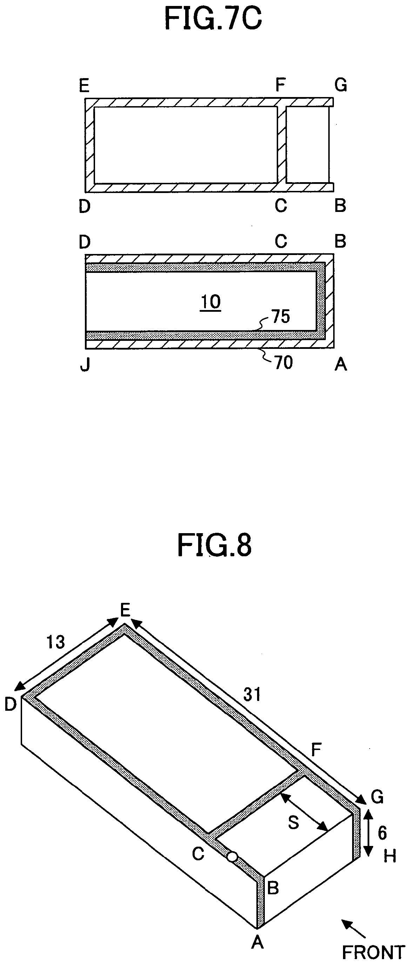

Next, a description will be given of another embodiment of the invention. FIG. 7A, FIG. 7B and FIG. 7C are diagrams for explaining a method of producing an RF tag in another embodiment of the invention.

In the step shown in FIG. 7A, a conductive layer 70 which is extending in a belt-like manner is formed on a flexible film 75. For example, a polyethylene-terephthalate (PET) film is used for the flexible film 75 in this embodiment.

Alternatively, any other flexible film which can be suitably used to support the conductive layer 70 may be used instead.

It should be noted that the thickness of each of the layers or films shown in FIGs. 7A-7C as well as FIGs. 6A-6D is enlarged from the actual dimension for the purpose of illustration. The above-mentioned film formation may be performed using the known film deposition method. The film deposition method, such as vapor deposition, may be used. Alternatively, a printing technique using a printer, etc. may also be used.

In the step shown in FIG. 7B, two windows 71 and 72 which penetrate the conductive layer 70 and the PET film 75 are formed. Subsequently, the window frames surrounding these windows will constitute conductive transmission lines. In this embodiment, after forming the conductive layer on the PET film, the two windows are formed. Alternatively, a conductive layer in which two windows are beforehand formed may be formed on the PET film 75 in the step shown in FIG. 7A.

In the step shown in FIG. 7C, the conductive layer 70 and the PET film 75 are stuck on the top surface, the front surface, and the bottom surface of the spacer 10. In this case, the conductive layer 70 and the PET film 75 are bent 90 degrees at two places indicated by the dotted line in FIG. 7B. In this manner, a conductive layer may be formed without using the spacer 10 as the base for the film formation.

According to this embodiment, it is possible to not only manufacture an RF tag simply, but also extend the flexibility to change the manufacturing process. For example, the component supplier who supplies conductive antennas, and the component supplier who supplies spacers may be the same, or they may be different. Moreover, according to this embodiment, the processing of antennas and the processing of spacers may be performed in parallel, and this is desirable from the viewpoint of increasing the throughput.

Next, a description will be given of another embodiment of the invention. FIG. 8 is a perspective view of an example of an RF tag for use in simulation tests. The numerical values in FIG. 8 denote a size of the RF tag in millimeters (namely, the width: 13 mm, the length: 31 mm, and the thickness: 6 mm).

The pattern of conductive transmission lines as shown in FIG. 1 may be formed on the top surface and the front surface of the spacer, and the bottom surface of the spacer may be connected to the ideal grounding conductor.

In the simulation tests, chip capacitance Ccp (pF), antenna resistance Rap (Ω), and antenna gain (dBi) were computed with respect to each of various lengths of the line elements BC and GF. It should be noted that the length of the antenna is much smaller than a typical wavelength (about 30 cm) of UHF band.

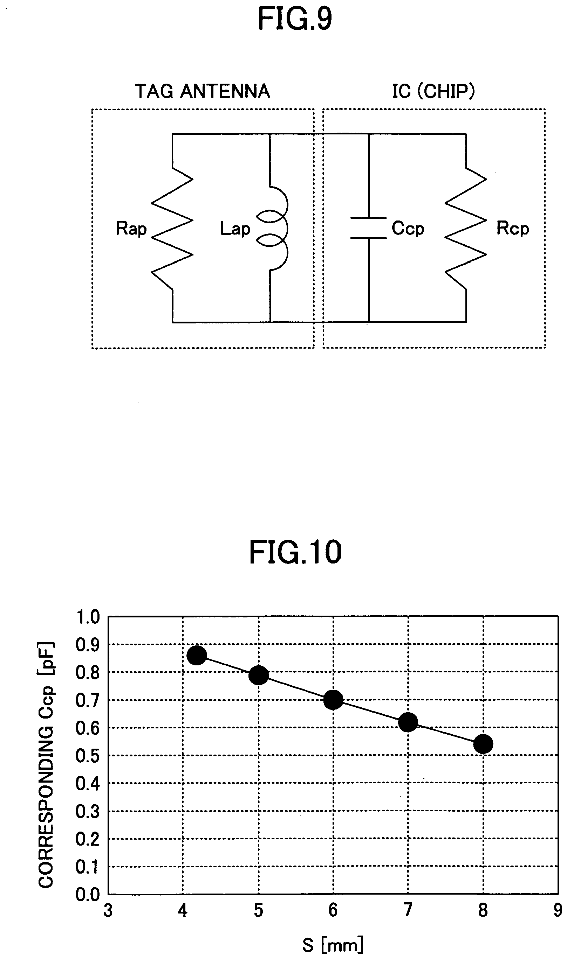

FIG. 9 shows the composition of an equivalent circuit of an antenna and a power supply circuit. As shown in FIG. 9, when an impedance of the antenna matches with an impedance of the power supply circuit (IC chip), both the resistance components are equal to each other and the inductance Lap of the antenna side and the capacitance Ccp of the power supply circuit side satisfy a predetermined condition. Namely, the following formulas are satisfied:

$$\mathrm{Rap \ = \ Rcp,} \quad \omega \, \mathrm{Lap \ = \ (\omega \, Ccp)}^{-1}$$

where $\omega$ denotes an angular frequency.

The line element length S of each of the line element BC and the line element GF in FIG. 8 is changed and the inductance Lap of the antenna is adjusted to satisfy the above-mentioned formulas. Thereby, it is possible to match the impedance of the antenna with the impedance of the power supply circuit.

FIG. 10 shows the results of the simulation tests concerning the relationship between line element length S and corresponding chip capacitance Ccp. As is apparent from FIG. 10, it is found out that the chip capacitance Ccp decreases almost linearly from 0.86 pF to 0.54 pF as the line element length S increases from 4.2 mm to 8 mm. For example, if the chip capacitance Ccp for the typical operating frequency of UHF band, such as 950 MHz, is about 0.6 pF, the line element length S in that case should be set to about 7 mm.

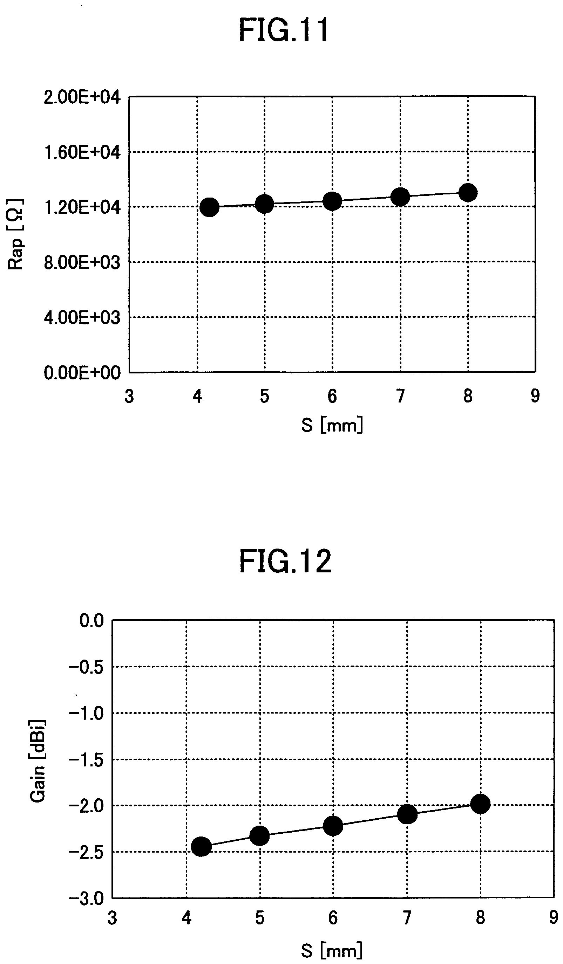

FIG. 11 shows the results of the simulation tests concerning the relationship between line element length S and antenna resistance Rap. As is apparent from FIG. 11, it is found out that the antenna resistance Rap gently increases from 11.9 kΩ to 12.9 kΩ almost linearly as the line element length S increases from 4.2 mm to 8 mm. For example, if the line element length S is about 7 mm, the antenna resistance in that case is equal to about 12.7 kΩ.

FIG. 12 shows the results of the simulation tests concerning the relationship between line element length S and antenna gain. As is apparent from FIG. 12, it is found out that the antenna gain increases from -2.45 dBi to -1.99 dBi almost linearly as the line element length S increases from 4.2 mm to 8 mm. For example, if the line element length S is about 7 mm, the antenna gain in that case is equal to about -2.1 dBi.

Among the elements (Rap, Lap, gain) which determine the impedance to be matched, the inductance Lap (the capacitance Ccp) is determined for the first time. This is because the inductance is the most important for the matching of impedance. The antenna gain is also important. However, if the antenna gain is high but in a mismatching state with the power supply circuit, then obtaining the benefit of high gain is difficult.

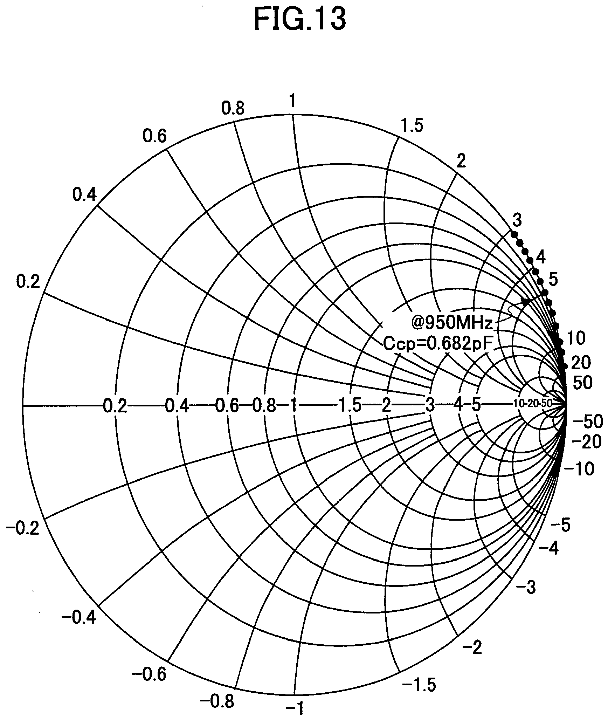

FIG. 13 is a diagram for explaining the frequency characteristics of an RF tag as shown in FIG. 8. The values of impedance computed for every 25 MHz from 800 MHz to 1.1 GHz are plotted on the Smith chart. The value of impedance when the chip capacitance is 0.682 pF at 950 MHz is indicated by the arrow in FIG. 13. The line element length S in this case is set to about 6.2 mm. As shown in FIG. 13, the change of impedance is not so large even if the frequency is changed greatly, and this RF tag is applicable also for the wide-band product uses.

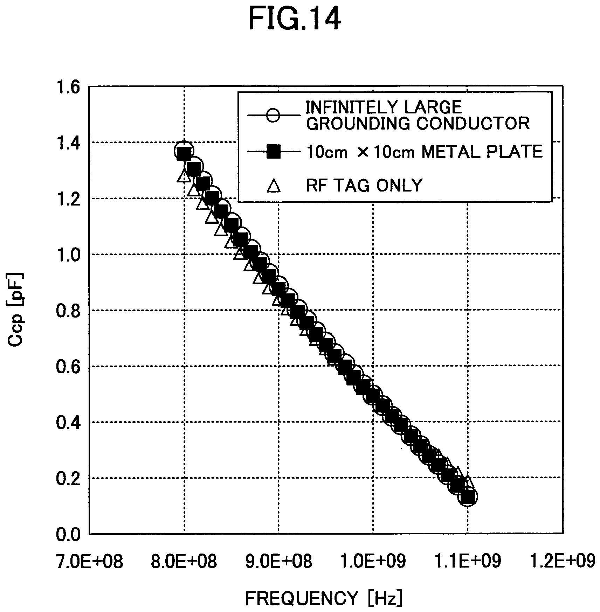

FIG. 14 shows the results of simulation tests concerning the relationship between frequency and chip capacitance for each of three grounding methods of an RF tag.

It is assumed for the simulation tests that the three grounding methods are: (1) the bottom surface of the RF tag is connected to the ideal, infinitely large grounding conductor; (2) it is connected with a 10cm x 10cm metal plate; and (3) it is not connected with any other metal.

As shown in FIG. 14, regardless of whether the grounding method used is any of the three methods, the chip capacitance decreases almost linearly from about 1.3 pF to about 0.7 pF as the frequency increases from 800 MHz to 1.1 GHz. Therefore, it is found out that the use of a specific grounding method does not have great influences on the matching in impedance of the antenna and the power supply circuit. This means that, regardless of whether the object with which the RF tag is accompanied has conductivity or not, matching the impedance of the antenna and the impedance of the power supply circuit in the RF tag is possible. Accordingly, there are a variety of products with which the RF tag of this embodiment can be accompanied.

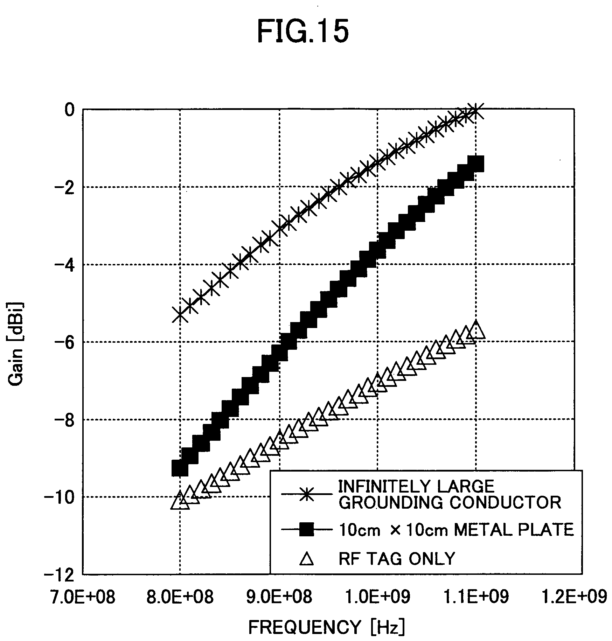

FIG. 15 shows the results of simulation tests concerning the relationship between frequency and antenna gain with respect to each of the three grounding methods (1), (2) and (3) mentioned above. As is apparent from FIG. 15, with respect to each of the three grounding methods, the gain increases as the frequency increases. However, the way the gain increases varies depending on the grounding method used. Specifically, when the frequency increases from 800 MHz to 1.1 GHz, the gain for the grounding method (1) increases from about -5.5 dBi to 0 dBi, the gain for the grounding method (2) increases from -9.5 dBi to -1.5 dBi, and the gain for the grounding method (3) increases from -10.2 dBi to -6.2 dBi. It is found out from the simulation results that, from the viewpoint of increasing the antenna gain, a grounding method which gives the grounding potential to the RF tag more stably would be advantageous.

Moreover, according to the simulation results of FIG. 14, the use of a specific grounding method does not have great influences on the matching in impedance of the antenna and the power supply circuit, and it is desirable that the RF tag is connected to the grounding potential which is stabilized as much as possible.

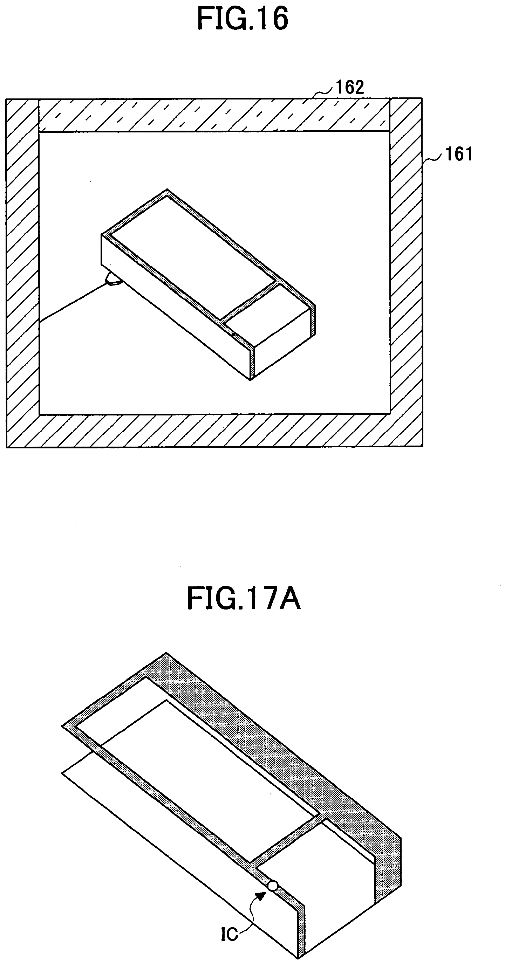

From the above-mentioned viewpoint, when an object with which an RF tag is accompanied has a metal housing, it is desirable that the RF tag is accommodated in the metal housing and the RF tag is connected to the metal housing, as shown in FIG. 16.

In the example shown in FIG. 16, an RF tag is accommodated in a housing which includes a metal surface 161 and an insulating material surface 162, and a grounding conductor on a bottom surface of the RF tag is connected to the metal surface 161. The insulating material surface 162 may be made of a resin material.

Next, a description will be given of another embodiment of the invention. FIG. 17A through FIG. 17H show various modifications of an antenna, an inductor, a power supply circuit, a grounding conductor, etc. of an RF tag.

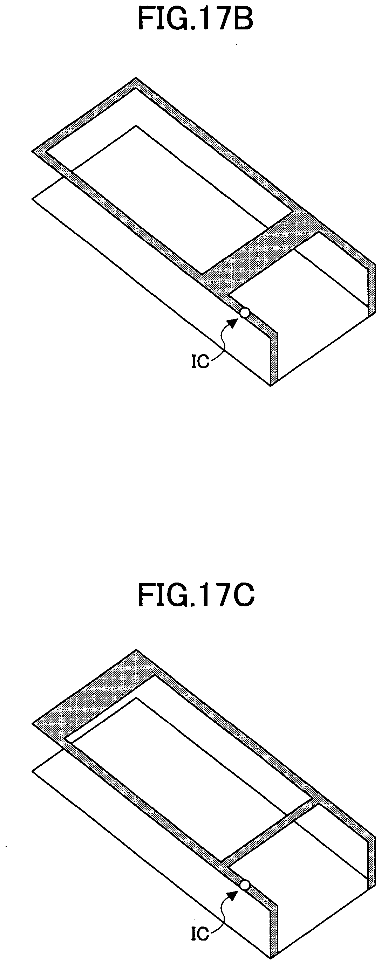

In the above-mentioned embodiments, the conductive transmission lines which constitute the antenna and the inductor are formed so that all of the conductive transmission lines have equal line width. Alternatively, as shown in FIG. 17A, FIG. 17B and FIG. 17C, the conductive transmission lines may be formed so that some of the conductive transmission lines have a different line width.

From the viewpoint of avoiding defective matters, such as disconnection, it is desirable to make the line width as large as possible. From the viewpoint of saving the conductive material, it is desirable to make the line width as small as possible.

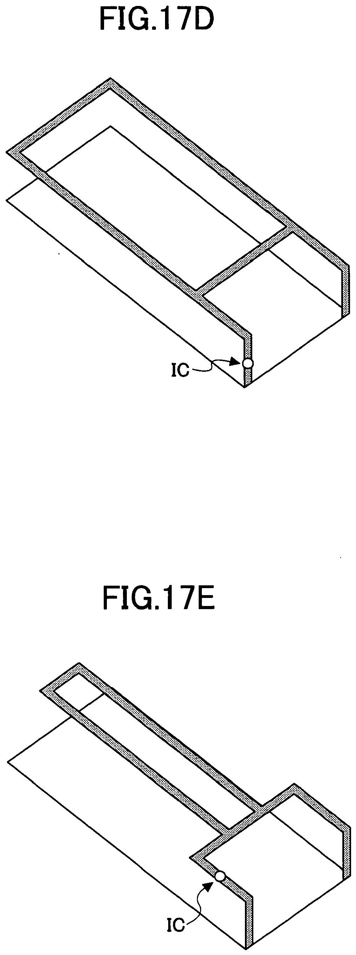

The power supply circuit (IC) may be disposed on the top surface of an RF tag. Alternatively, as shown in FIG. 17D, the power supply circuit (IC) may be disposed on the front surface of an RF tag. However, the thickness T of the spacer is comparatively small and the length L of the spacer is comparatively large, and it is desirable to dispose an IC on the top surface of an RF tag, from the viewpoint of facilitating the IC loading process.

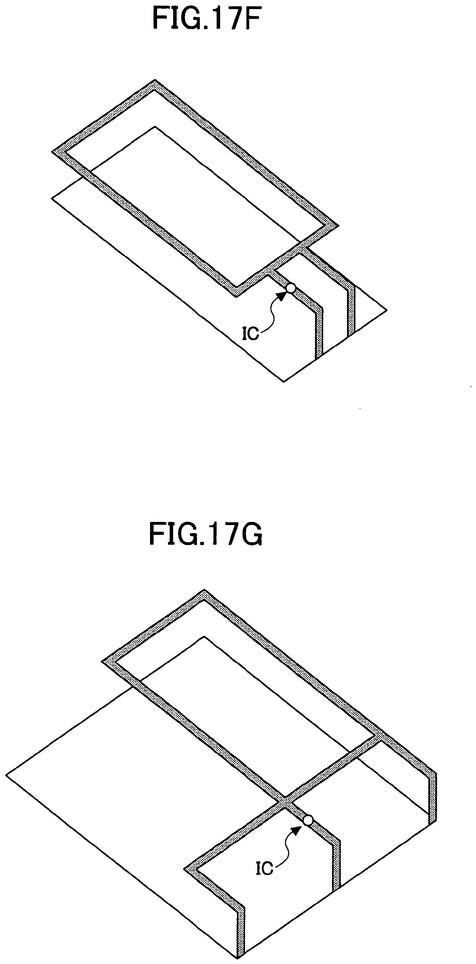

The conductive transmission lines may be arranged to have a form along the sides of the spacer in the shape of a rectangular parallelepiped. Alternatively, as shown in FIG. 17E and FIG. 17F, some of the conductive transmission lines may be formed on the top surface or the front surface of the spacer. The spacing of parallel transmission lines at a certain place may be different from that at other places. However, it is desirable to reduce the number of times of bending of a transmission line, from the viewpoint of reducing undesired influences (reflection, etc.) on a transmission signal flowing through the transmission line.

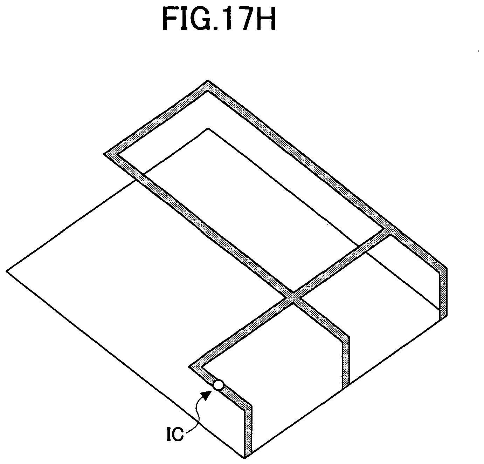

The transmission lines which constitute a dipole antenna and the transmission lines which constitute an inductor may be partially shared. Alternatively, as shown in FIG. 17G and FIG. 17H, the transmission lines which constitute an inductor may be provided separately from the transmission lines which constitute a dipole antenna. However, it is necessary that the transmission lines of the inductor are formed appropriately so that a conductor exists under the transmission lines of the inductor so as to allow an image current to flow therethrough.

**Claims**

1. An RF tag comprising:

   - a grounding conductor (12);
   - a spacer (10) of a material having a predetermined dielectric constant in the shape of a rectangular parallelepiped;
   - a first transmission line forming an electric closed loop to constitute a dipole antenna, said first transmission line arranged on a top and front surface of the spacer, and arranged along sides of a notional rectangular parallelepiped of height T, length L and width W, said notional parallelepiped defined by its bottom surface with points AHKJ and the top surface with points BGED, and having a top and bottom surface of dimensions $W \times L$, front and back surface of dimensions $W \times T$ and side surfaces of dimensions $L \times T$, said first transmission line having two line elements of length T extending between points AB and GH, arranged on the front surface, two further line elements of length L extending between points BD and GE, arranged on the top surface, and a line element between points DE of length W, arranged on the top surface, the line elements AB, BD, DE, EG and GH forming said closed loop, said first transmission line connected to the grounding conductor (12) at points A and H, wherein $W < 2(L+T)$;
   - a first branch point C located between the points B and D;
   - a second branch point F located between the points G and E;
   - a second transmission line connected between the first branch point C and the second branch point F, and arranged geometrically in parallel with the line element between the points D and E, to constitute an inductor;
   - a power supply circuit (IC) connected in series and arranged between said first branch point C on the first transmission line and the point A at the grounding conductor (12),

   wherein the first and second transmission lines are arranged on the spacer (10), and wherein the grounding conductor (12) is arranged on a bottom surface of the spacer (10) and occupies at least the bottom surface defined by points AHKJ, and said first transmission line is arranged on a top surface of the spacer, and the second transmission line is arranged on the front surface of the spacer (10).

2. The RF tag according to claim 1, wherein the first and second transmission lines are arranged so that an image current flowing through the first and second transmission lines flows through the grounding conductor (12).

3. The RF tag according to claim 1, wherein a first pair of parallel transmission line elements of the transmission lines are connected to the grounding conductor (12), and wherein a second pair of parallel transmission line elements of the transmission lines perpendicularly join the first pair of parallel transmission line elements.

4. The RF tag according to claim 3, wherein a line element length of the second pair of transmission line elements is smaller than twice a line element length of the first pair of transmission line elements.

5. The RF tag according to claim 1, wherein a position of the branch point (C) on the first transmission line is determined to adjust an inductance of the inductor so that an impedance of the antenna matches with an impedance of the power supply circuit (IC).

6. The RF tag according to claim 1, further comprising a housing (161, 162) with which the RF tag is accompanied, wherein the grounding conductor (12) is connected to a metal surface (161) of the housing.

7. The RF tag according to claim 1, wherein the first and second transmission lines are formed by microstrip lines.

8. A method of producing an RF tag in which a first transmission line forming an electric closed loop to constitute a dipole antenna and a second transmission line constituting an inductor are formed on a spacer (10), in the shape of a rectangular parallelepiped, of a material having a predetermined dielectric constant, and a grounding conductor (12) is electrically connected to the first and second transmission lines,
   wherein
   said first transmission line is arranged on a top and front surface of the spacer, and arranged along sides of a notional rectangular parallelepiped of height T, length L and width W, said notional parallelepiped defined by its bottom surface with points AHKJ and the top surface with points BGED, and having a top and bottom surface of dimensions $W \times L$, front and back surface of dimensions $W \times T$ and side surfaces of dimensions $L \times T$, said first transmission line having two line elements of length T extending between points AB and GH, arranged on the front surface, two further line elements of length L extending between points BD and GE, arranged on the top surface, and a line element between points DE of length W, arranged on the top surface, the line elements AB, BD, DE, EG and GH forming said closed loop, said first transmission line connected to the grounding conductor (12) at points A and H, wherein W<2(L+T);

- a first branch point C is located between the points B and D;
- a second branch point F is located between the points G and E;

the method comprising:

arranging a power supply circuit (IC), which is connected in series to the first transmission line, between said first branch point (C) on the first transmission line and the point A at the grounding conductor (12); and arranging the second transmission line which is connected between the first branch point (C) and a second branch point (F) on the first transmission line so that the second transmission line is arranged in parallel with the power supply circuit (IC) and is arranged geometrically in parallel with the line element between the points D and E,
wherein grounding conductor (12) is arranged on a bottom surface of the spacer (10) and occupies at least the bottom surface defined by point AHKJ, and the first transmission line is arranged on a top surface of the spacer, and the second transmission line is arranged on the front surface of the spacer (10).

**Patentansprüche**

1. RF-Tag, umfassend:

- einen Erdungsleiter (12);
- ein Distanzstück (10) aus einem Material, das eine vorbestimmte dielektrische Konstante in Form eines rechteckigen Quaders aufweist;
- eine erste Übertragungsleitung, die einen elektrisch geschlossenen Kreis zum Bilden einer Dipolantenne ausbildet, wobei die erste Übertragungsleitung auf einer oberen und vorderen Oberfläche des Distanzstücks angeordnet ist und entlang der Seiten eines fiktiven rechteckigen Quaders der Höhe T, Länge L und Breite W angeordnet ist, wobei der fiktive Quader durch seine untere Oberfläche durch die Punkte AHKJ und die obere Oberfläche durch die Punkte BGED definiert wird und eine obere und untere Oberfläche der Abmessungen WxL, eine vordere und hintere Oberfläche der Abmessungen WxT und Seitenoberflächen der Abmessungen LxT aufweist, wobei die erste Übertragungsleitung zwei Leitungselemente der Länge T, die sich zwischen den Punkten AB und GH erstrecken, die an der vorderen Oberfläche angeordnet sind, zwei weitere Leitungselemente der Länge L, die sich zwischen den Punkten BD und GE erstrecken, die auf der oberen Oberfläche angeordnet sind, und ein Leitungselement zwischen den Punkten DE der Länge W, das auf der oberen Oberfläche angeordnet ist, aufweist, wobei die Leitungselemente AB, BD, DE, EG und GH den geschlossenen Kreis ausbilden, wobei die erste Übertragungsleitung mit dem Erdungsleiter (12) an den Punkten A und H verbunden ist, wobei W<2(L+T);
- einen ersten Verzweigungspunkt C, der sich zwischen den Punkten B und D befindet;
- einen zweiten Verzweigungspunkt F, der sich zwischen den Punkten G und E befindet;
- eine zweite Übertragungsleitung, die zwischen dem ersten Verzweigungspunkt C und dem zweiten Verzweigungspunkt F verbunden und geometrisch parallel zum Leitungselement zwischen den Punkten D und E zum Bilden einer Induktionsspule angeordnet ist;
- eine Stromversorgungsschaltung (IC), die in Reihe angeschlossen ist und zwischen dem ersten Verzweigungspunkt C an der ersten Übertragungsleitung und Punkt A am Erdungsleiter (12) angeordnet ist,

wobei die erste und die zweite Übertragungsleitung auf dem Distanzstück (10) angeordnet sind und wobei der Erdungsleiter (12) auf der unteren Oberfläche des Distanzstücks (10) angeordnet ist und mindestens die untere Oberfläche einnimmt, die von den Punkten AHKJ definiert wird, und die erste Übertragungsleitung auf einer oberen Oberfläche des Distanzstücks angeordnet ist und die zweite Übertragungsleitung auf der vorderen Oberfläche des Distanzstücks (10) angeordnet ist.

2. RF-Tag nach Anspruch 1, wobei die erste und die zweite Übertragungsleitung derart angeordnet sind, dass ein Bildstrom, der durch die erste und zweite Übertragungsleitung fließt, durch den Erdungsleiter (12) fließt.

**3.** RF-Tag nach Anspruch 1, wobei ein erstes Paar paralleler Übertragungsleitungselemente der Übertragungsleitungen mit dem Erdungsleiter (12) verbunden ist, und wobei ein zweites Paar paralleler Übertragungsleitungselemente der Übertragungsleitungen senkrecht mit dem ersten Paar von parallelen Übertragungsleitungselementen verbunden ist.

**4.** RF-Tag nach Anspruch 3, wobei eine Leitungselementlänge des zweiten Paares von Übertragungsleitungselementen kleiner als das Zweifache einer Leitungselementlänge des ersten Paares von Übertragungsleitungselementen ist.

**5.** RF-Tag nach Anspruch 1, wobei eine Position des Verzweigungspunktes (C) auf der ersten Übertragungsleitung bestimmt wird, um eine Induktivität der Induktionsspule einzustellen, so dass eine Impedanz der Antenne mit einer Impedanz der Stromversorgungsschaltung (IC) übereinstimmt.

**6.** RF-Tag nach Anspruch 1, ferner umfassend ein Gehäuse (161, 162), von dem das RF-Tag begleitet wird, wobei der Erdungsleiter (12) mit einer Metalloberfläche (161) des Gehäuses verbunden ist.

**7.** RF-Tag nach Anspruch 1, wobei die erste und die zweite Übertragungsleitung durch Mikrostreifenleitungen ausgebildet werden.

**8.** Verfahren zur Herstellung eines RF-Tags, bei dem eine erste Übertragungsleitung, die einen elektrisch geschlossenen Kreis ausbildet, um eine Dipolantenne zu bilden, und eine zweite Übertragungsleitung, die eine Induktionsspule bildet, auf einem Distanzstück (10) ausgebildet sind, in Form eines rechteckigen Quaders aus einem Material, das eine vorbestimmte dielektrische Konstante aufweist, und wobei ein Erdungsleiter (12) elektrisch mit der ersten und zweiten Übertragungsleitung verbunden ist,
wobei
die erste Übertragungsleitung auf einer oberen und vorderen Oberfläche des Distanzstücks angeordnet ist und entlang der Seiten eines fiktiven rechteckigen Quaders der Höhe T, Länge L und Breite W angeordnet ist, wobei der fiktive Quader durch seine untere Oberfläche durch die Punkte AHKJ und die obere Oberfläche durch die Punkte BGED definiert wird und eine obere und untere Oberfläche der Abmessungen WxL, eine vordere und hintere Oberfläche der Abmessungen WxT und Seitenoberflächen der Abmessungen LxT aufweist, wobei die erste Übertragungsleitung zwei Leitungselemente der Länge T, die sich zwischen den Punkten AB und GH erstrecken, die an der vorderen Oberfläche angeordnet sind, zwei weitere Leitungselemente der Länge L, die sich zwischen den Punkten BD und GE erstrecken, die auf der oberen Oberfläche angeordnet sind, und ein Leitungselement zwischen den Punkten DE der Länge W, das auf der oberen Oberfläche angeordnet ist, aufweist, wobei die Leitungselemente AB, BD, DE, EG und GH den geschlossenen Kreis ausbilden, wobei die erste Übertragungsleitung mit dem Erdungsleiter (12) an den Punkten A und H verbunden ist, wobei W<2(L+T);

- sich ein erster Verzweigungspunkt C zwischen den Punkten B und D befindet;
- sich ein zweiter Verzweigungspunkt F zwischen den Punkten G und E befindet;

das Verfahren umfassend:

Anordnen einer Stromversorgungsschaltung (IC), die in Reihe an die erste Übertragungsleitung, zwischen dem ersten Verzweigungspunkt (C) an der ersten Übertragungsleitung und Punkt A am Erdungsleiter (12) angeschlossen ist; und
Anordnen der zweiten Übertragungsleitung, die zwischen dem ersten Verzweigungspunkt (C) und dem zweiten Verzweigungspunkt (F) an der ersten Übertragungsleitung angeschlossen ist, sodass die zweite Übertragungsleitung parallel zur Stromversorgungsschaltung (IC) angeordnet ist und geometrisch parallel zum Leitungselement zwischen den Punkten D und E angeordnet ist,
wobei ein Erdungsleiter (12) auf einer unteren Oberfläche des Distanzstücks (10) angeordnet ist und mindestens die untere Oberfläche einnimmt, die von den Punkten AHKJ definiert wird, und die erste Übertragungsleitung auf einer oberen Oberfläche des Distanzstücks angeordnet ist und die zweite Übertragungsleitung auf der vorderen Oberfläche des Distanzstücks (10) angeordnet ist.

**Revendications**

**1.** Etiquette RF comprenant :

- un conducteur de mise à la terre (12) ;
- une entretoise (10) en un matériau ayant une constante diélectrique prédéterminée sous la forme d'un parallélépipède rectangulaire ;
- une première ligne de transmission formant une boucle fermée électrique pour constituer une antenne dipôle, ladite première ligne de transmission étant agencée sur une surface supérieure et avant de l'entretoise, et agencée le long de côtés d'un parallélépipède rectangulaire imaginaire de hauteur T, de longueur L et de largeur W, ledit parallélépipède imaginaire étant défini par sa surface inférieure avec des points AHKJ et la surface supérieure avec des points BGED, et ayant une surface supérieure et inférieure de dimensions W x L, une surface avant et arrière de dimensions W x T et des surfaces latérales de dimensions L x T, ladite première ligne de transmission ayant deux éléments de ligne de longueur T s'étendant entre les points AB et GH, agencés sur la surface avant, deux éléments de ligne supplémentaires de longueur L s'étendant entre les points BD et GE, agencés sur la surface supérieure, et un élément de ligne entre les points DE de longueur W, agencé sur la surface supérieure, les éléments de ligne AB, BD, DE, EG et GH formant ladite boucle fermée, ladite première ligne de transmission étant connectée au conducteur de mise à la terre (12) au niveau des points A et H, dans laquelle W < 2 (L + T) ;
- un premier point de dérivation C situé entre les points B et D ;
- un second point de dérivation F situé entre les points G et E ;
- une seconde ligne de transmission connectée entre le premier point de dérivation C et le second point de dérivation F, et agencée géométriquement en parallèle avec l'élément de ligne entre les points D et E, pour constituer un inducteur ;
- un circuit d'alimentation en énergie (IC) connecté en série et agencé entre ledit premier point de dérivation C sur la première ligne de transmission et le point A au niveau du conducteur de mise à la terre (12),

dans laquelle les première et seconde lignes de transmission sont agencées sur l'entretoise (10), et dans laquelle le conducteur de mise à la terre (12) est agencé sur une surface inférieure de l'entretoise (10) et occupe au moins la surface inférieure définie par les points AHKJ, et ladite première ligne de transmission est agencée sur une surface supérieure de l'entretoise, et la seconde ligne de transmission est agencée sur la surface avant de l'entretoise (10).

2. Etiquette RF selon la revendication 1, dans laquelle les première et seconde lignes de transmission sont agencées de sorte qu'un courant image circulant à travers les première et seconde lignes de transmission circule à travers le conducteur de mise à la terre (12).

3. Etiquette RF selon la revendication 1, dans laquelle une première paire d'éléments de ligne de transmission parallèles des lignes de transmission est connectée au conducteur de mise à la terre (12), et dans laquelle une seconde paire d'éléments de ligne de transmission parallèles des lignes de transmission joint perpendiculairement la première paire d'éléments de ligne de transmission parallèles.

4. Etiquette RF selon la revendication 3, dans laquelle une longueur d'élément de ligne de la seconde paire d'éléments de ligne de transmission est plus petite que deux fois une longueur d'élément de ligne de la première paire d'éléments de ligne de transmission.

5. Etiquette RF selon la revendication 1, dans laquelle une position du point de dérivation (C) sur la première ligne de transmission est déterminée pour ajuster une inductance de l'inducteur de sorte qu'une impédance de l'antenne concorde avec une impédance du circuit d'alimentation en énergie (IC).

6. Etiquette RF selon la revendication 1, comprenant en outre un boîtier (161, 162) avec lequel l'étiquette RF est accompagnée, dans laquelle le conducteur de mise à la terre (12) est connecté à une surface en métal (161) du boîtier.

7. Etiquette RF selon la revendication 1, dans laquelle les première et seconde lignes de transmission sont formées par des lignes microrubans.

8. Procédé de production d'une étiquette RF dans laquelle une première ligne de transmission formant une boucle fermée électrique pour constituer une antenne dipôle et une seconde ligne de transmission constituant un inducteur sont formées sur une entretoise (10), sous la forme d'un parallélépipède rectangulaire, en un matériau ayant une constante diélectrique prédéterminée, et un conducteur de mise à la terre (12) est connecté électriquement aux première et seconde lignes de transmission,
dans lequel
ladite première ligne de transmission est agencée sur une surface supérieure et avant de l'entretoise, et agencée le long de côtés d'un parallélépipède rectangulaire imaginaire de hauteur T, de longueur L et de largeur W, ledit parallélépipède imaginaire étant défini par sa surface inférieure avec des points AHKJ et la surface supérieure avec des points BGED, et ayant une surface supérieure et inférieure de dimensions W x L, une surface avant et arrière de dimensions W x T et des surfaces latérales de dimensions L x T, ladite première ligne de transmission ayant deux éléments de ligne de longueur T s'étendant entre les points AB et GH, agencés sur la surface avant, deux éléments de ligne supplémentaires de longueur L s'étendant entre les points BD et GE, agencés sur la surface supérieure, et un élément de ligne entre les points DE de longueur W, agencé sur la surface supérieure, les éléments de ligne AB, BD, DE, EG et GH formant ladite boucle fermée, ladite première ligne de transmission étant connectée au conducteur de mise à la terre (12) au niveau des points A et H, dans lequel W < 2 (L + T) ;

- un premier point de dérivation C est situé entre les points B et D ;
- un second point de dérivation F est situé entre les points G et E ;

le procédé comprenant :

l'agencement d'un circuit d'alimentation en énergie (IC), qui est connecté en série à la première ligne de transmission, entre ledit premier point de dérivation (C) sur la première ligne de transmission et le point A au niveau du conducteur de mise à la terre (12) ; et

l'agencement de la seconde ligne de transmission qui est connectée entre le premier point de dérivation (C) et un second point de dérivation (F) sur la première ligne de transmission de sorte que la seconde ligne de transmission soit agencée en parallèle avec le circuit d'alimentation en énergie (IC) et soit agencée géométriquement en parallèle avec l'élément de ligne entre les points D et E,

dans lequel un conducteur de mise à la terre (12) est agencé sur une surface inférieure de l'entretoise (10) et occupe au moins la surface inférieure définie par les points AHKJ, et la première ligne de transmission est agencée sur une surface supérieure de l'entretoise, et la seconde ligne de transmission est agencée sur la surface avant de l'entretoise (10).

# FIG.1

# FIG.2

# FIG.3

CONDUCTOR SIDE

E             F   G   H               K

W

D            C   B   A               J

L+T

# FIG.4

E                     G   H               K

W

D            C   B   A               J

F'

L+T

# FIG.5

# FIG.6A

(PLAN VIEW)

(SIDE VIEW)

<u>10</u>

# FIG.6B

(PLAN VIEW)

(SIDE VIEW)

12

# FIG.6C

(PLAN VIEW)

(SIDE VIEW) 10

12

# FIG.6D

10

12

# FIG.7A

# FIG.7B

## FIG.7C

## FIG.8

# FIG.9

TAG ANTENNA                IC (CHIP)

Rap    Lap          Ccp    Rcp

# FIG.10

# FIG.11

# FIG.12

# FIG.13

# FIG.14

# FIG.15

# FIG.16

# FIG.17A

IC

# FIG.17B

IC

# FIG.17C

IC

## FIG.17D

## FIG.17E

# FIG.17F

IC

# FIG.17G

IC

FIG.17H

IC

**EP 1 921 711 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004093249 A1
- EP 1555715 A1

- US 20050024287 A1

**Non-patent literature cited in the description**

- Folded L-Antennas. **FENG NIU.** IEEE Antennas and Propagation Society International Symposium. 2000 Digest. APS. Institute of Electrical and Electronics Engineers, 16 July 2000